# FASCICULE DE BREVET EUROPEEN

(11) **EP 2 789 417 B1**
(45) Date de publication et mention de la délivrance du brevet: **15.03.2017**
(21) Numéro de dépôt: 14163269.5
(22) Date de dépôt: 02.04.2014
(51) Int. Cl.: B23B 47/28

(54) **Guide de perçage pour tubes de différents diamètres**
Bohrführung für Rohre mit verschiedenen Durchmessern
Drilling jig for tubes of different diameters

(30) Priorité: 12.04.2013 FR 1353341
(43) Date de publication de la demande: 15.10.2014
(73) Titulaire: Parker Hannifin Manufacturing France SAS, 74112 Annemasse (FR)
(72) Inventeur: Chaillot, Cyril, 35230 ORGERES (FR)
(74) Mandataire: Lavialle, Bruno François Stéphane

(56) Documents cités:
- US-A- 2 892 480
- US-A- 3 172 454
- US-A- 4 005 945
- US-A- 5 800 099
- US-A1- 2008 187 404

## Description

La présente invention concerne un guide de perçage pour tubes de différents diamètres selon le préambule de la revendication 1. Un tel guide de perçage est connu du document US 5 800 099 A1.

Pour former un circuit de transport de fluide, il peut être nécessaire de réaliser des perçages dans les tubes destinés à constituer le circuit pour :
- former des dérivations comme dans le document EP-A-0575225,
- y engager des crampons permettant la fixation d'un raccord comme dans le document EP-A-1085245.

Les perçages sont réalisés sur le site d'installation du circuit au moyen d'un outil coupant comme un foret monté dans le mandrin d'une perceuse.

Pour faciliter la réalisation des perçages, notamment en positionnant précisément le foret et en évitant que la pointe du foret ne glisse sur la surface du tube, il est connu des guides de perçage permettant de guider le guider le foret pendant la réalisation du perçage.

Le document US-A-3589825 décrit un tel guide de perçage constitué d'un bloc dans lequel sont ménagées une première série d'alésages pour recevoir des tubes de diamètres différents et une deuxième série d'alésages s'étendant transversalement par rapport aux alésages de la première série pour former des canons de perçage. Il est nécessaire d'enfiler le tube à percer dans l'alésage de la première série ayant un diamètre correspondant à celui du tube. Or, les tubes peuvent être très longs (six mètres) et le perçage à réaliser peut se trouver vers le milieu du tube. La mise en place du tube dans le guide de perçage s'avère donc peu pratique. En outre, le tube n'est pas serré dans le guide de perçage de sorte que les vibrations engendrées par le fonctionnement de la perceuse risquent de déplacer le tube par rapport aux canons de perçage.

Le document US-A-5800099 décrit un guide de perçage sous la forme d'une pince-étau dont un des mors est pourvu d'un canon de perçage. Ce guide de perçage est cependant lui aussi peu pratique car la pince doit être réglée à chaque utilisation en fonction du diamètre du tube à percer. En outre, il n'est pas possible avec ce type de guide de réaliser des perçages traversants.

Un but de l'invention est de fournir un guide de perçage qui soit plus pratique à utiliser.

A cet effet, on prévoit, selon l'invention, un guide de perçage pour tubes de plusieurs diamètres, comportant au moins un premier demi-corps et un deuxième demi-corps qui ont chacun une première face et une deuxième face opposées l'une à l'autre et qui sont reliés l'un à l'autre par au moins une articulation de telle manière que les deux demi-corps soient mobiles l'un par rapport à l'autre entre une première position de fermeture dans laquelle les premières faces des demi-corps sont en regard l'une de l'autre et une deuxième position de fermeture dans laquelle les deuxièmes faces des demi-corps sont en regard l'une de l'autre. Les premières faces sont pourvues chacune d'au moins un logement ouvert pour recevoir une portion d'un tube d'un premier diamètre et les deuxièmes faces sont pourvues chacune d'au moins un logement ouvert pour recevoir une portion d'un tube d'un deuxième diamètre. Un alésage cylindrique s'étend depuis l'une des première et deuxième faces d'au moins le premier demi-corps pour déboucher dans le logement de l'autre des faces du premier demi-corps pour former un canon de perçage.

Ainsi, le guide de perçage, dans ses deux positions de fermeture, délimite au moins deux logements de diamètres différents permettant au guide perçage d'être monté sans réglage particulier sur des tubes de diamètre correspondant.

Avantageusement, le deuxième demi-corps est pourvu d'un alésage positionné pour s'étendre coaxialement à l'alésage du premier demi-corps lorsque les demi-corps sont dans au moins une des positions de fermeture.

Ceci permet de réaliser des perçages traversant dans les tubes.

De préférence, le guide de perçage comprend au moins un organe de maintien des demi corps dans l'une au moins des positions de fermeture et, avantageusement, l'organe de maintien comprend une vis à oeillet pourvue d'un écrou et articulée sur l'un des demi-corps entre deux positions à 180° l'une de l'autre pour pouvoir être reçue dans une rainure de l'autre demi-corps lorsque les demi-corps sont dans l'une quelconque de leurs positions de fermeture.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en perspective d'un guide de perçage conforme à l'invention, le guide de perçage étant dans une première position de fermeture ;
- la figure 2 est une vue en élévation d'un guide de perçage dans une position d'ouverture ;
- la figure 3 est une vue en élévation d'un guide de perçage dans une deuxième position de fermeture.

En référence aux figures, le guide de perçage conforme à l'invention est agencé pour permettre le perçage de tubes de plusieurs diamètres, ici quatre diamètres.

Le guide conforme à l'invention comporte au moins un premier demi-corps 10.1 et un deuxième demi-corps 10.2 qui ont chacun une première face 11.1, 11.2 et une deuxième face 12.1, 12.2 opposées l'une à l'autre.

Les premières faces 11.1, 11.2 sont pourvues chacune de deux logements ouverts 13.1, 14.1, 13.2, 14.2 pour recevoir une portion d'un tube d'un premier diamètre et d'un tube d'un deuxième diamètre respectivement.

Les deuxièmes faces 12.1, 12.2 sont pourvues chacune de deux logements ouverts 15.1, 16.1, 15.2, 16.2 pour recevoir une portion d'un tube d'un troisième diamètre et d'un tube d'un quatrième diamètre.

Les logements 13.1, 14.1 sont respectivement alignés avec les logements 15.1, 16.1 le long d'une direction normale au plan des faces 11.1, 11.2, 12.1, 12.2. Les logements 13.2, 14.2 sont respectivement alignés avec les logements 15.2, 16.2. Les logements 13.1, 14.1, 15.1, 16.1, 13.2, 14.2, 15.2, 16.2 ont ici une forme sensiblement semi-circulaire. Plus précisément, la profondeur des logements 13.1, 14.1, 15.1, 16.1, 13.2, 14.2, 15.2, 16.2 est inférieure au rayon desdits logements.

Des alésages cylindriques 17.1, 17.2 s'étendent entre la première face 11.1, 11.2 et la deuxième face 12.1, 12.2 de chaque demi-corps 10.1, 10.2 pour déboucher dans les logements 13.1, 15.1, 13.2, 15.2.

Des alésages cylindriques 18.1, 18.2 s'étendent entre la première face 11.1, 11.2 et la deuxième face 12.1, 12.2 de chaque demi-corps 10.1, 10.2 pour déboucher dans les logements 14.1, 16.1, 14.2, 16.2.

Les alésages 17.1, 17.2, 18.1, 18.2 font ici tous le même diamètre et forment des canons de perçage. Les alésages 17.1, 17.2, 18.1, 18.2 s'étendent perpendiculairement à un plan moyen des faces 11.1, 11.2, 12.1, 12.2.

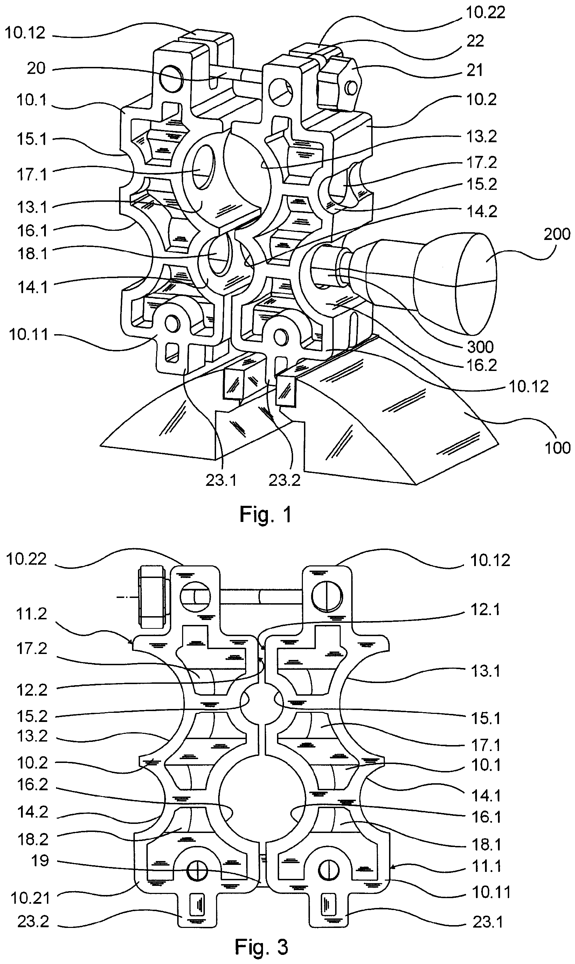

Les demi-corps 10.1, 10.2 sont ici reliés l'un à l'autre par une de leurs extrémités 10.11, 10.21. Une biellette 19 a ici une extrémité articulée à l'extrémité 10.11 du demi-corps 10.1 et une extrémité opposée articulée à l'extrémité 10.21 du demi-corps 10.2. La longueur et le débattement de la biellette 19 sont tels que les deux demi-corps 10.1, 10.2 sont mobiles l'un par rapport à l'autre entre une première position de fermeture dans laquelle les premières faces 11.1, 11.2 des demi-corps 10.1, 10.2 sont en regard l'une de l'autre (figure 1) et une deuxième position de fermeture dans laquelle les deuxièmes faces 12.1, 12.2 des demi-corps 10.1, 10.2 sont en regard l'une de l'autre (figure 3). Dans les positions de fermeture, chaque paire de logements en regard délimite un logement cylindrique à section transversale circulaire apte à accueillir un tronçon de tube à percer.

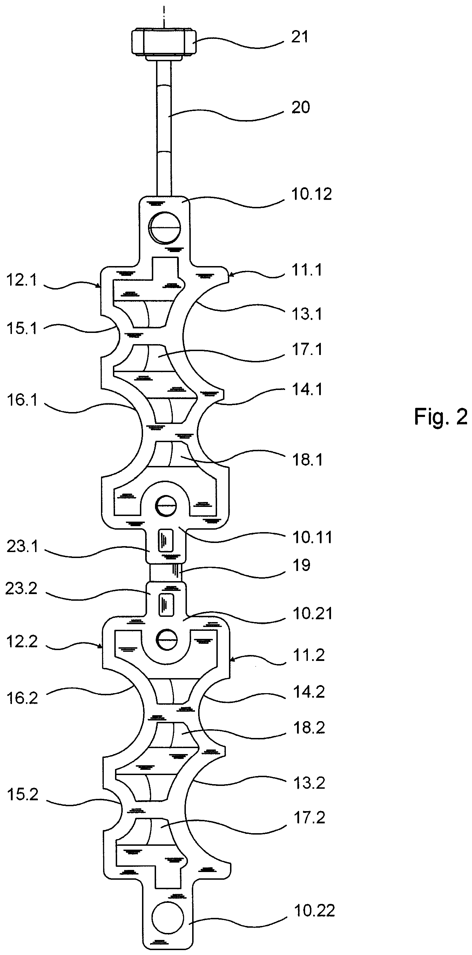

Les deux positions de fermeture sont réalisées de part et d'autre d'une position d'ouverture maximale (figure 2).

Le guide comprend au moins un organe de maintien des demi-corps 10.1, 10.2 dans leurs deux positions de fermeture. L'organe de maintien comprend une vis à oeillet 20 pourvue d'un écrou 21 et articulée sur l'extrémité 10.12 du demi-corps 10.1 entre deux positions à 180° l'une de l'autre pour pouvoir être reçue dans une rainure 22 ménagée dans l'extrémité 10.22 de l'autre demi-corps 10.2 lorsque les demi-corps 10.1, 10.2 sont dans l'une quelconque de leurs positions de fermeture.

L'extrémité 10.11, 10.21 de chaque demi-corps 10.1, 10.2 comporte une partie de préhension 23.1, 23.2 agencée pour pouvoir être pincée dans un dispositif de serrage tel qu'un étau.

En utilisation, pour percer un tube, le guide de perçage est refermé sur le tube de telle manière que celui-ci soit reçu dans les logements correspondant à son diamètre. On comprend que le serrage de l'écrou 21, qui va prendre appui sur le demi-corps 10.2 à l'extrémité de la rainure 22, va permettre de serrer le guide sur le tube.

La partie de préhension d'un des deux demi-corps est alors serrée dans un étau 100 pour maintenir le guide et le tube en position et faciliter l'opération de perçage.

Un outil coupant, comme un foret monté sur une perceuse 200, est alors engagé dans l'alésage débouchant dans le logement de manière à percer le tube. On notera que les deux demi-corps 10.1, 10.2 sont pourvus d'alésages positionnés pour s'étendre coaxialement l'un à l'autre lorsque les demi-corps sont dans leurs positions de fermeture, de sorte qu'il est possible de réaliser un perçage traversant le tube.

Lorsque le foret a un diamètre inférieur au diamètre de l'alésage formant canon de perçage, l'outil comprend avantageusement des moyens annexes de guidage du foret dans l'alésage. Les moyens annexes de guidage comprennent ici une cale 300 de forme cylindrique ou tubulaire (comme une cloche) entourant le foret, la cale ayant un diamètre légèrement inférieur au diamètre de l'alésage. En variante, on pourrait utiliser un foret étagé comportant une partie de plus fort diamètre formant les moyens annexes de guidage et une partie coupante de diamètre inférieur.

Bien entendu, l'invention n'est pas limitée aux modes de réalisation décrits mais englobe toute variante entrant dans le champ de l'invention telle que définie par les revendications.

En particulier, les logements ménagés dans les faces des demi-corps peuvent avoir une section nettement inférieure au demi-cercle et par exemple égale à un quart de cercle. Le nombre et le positionnement des logements peuvent également être modifiés.

En variante également, les alésages peuvent être agencés pour recevoir des canons de perçage interchangeables.

## Revendications

1. Guide de perçage pour tubes de plusieurs diamètres, comportant au moins un premier demi-corps (10.1) et un deuxième demi-corps (10.2) qui ont chacun une première face (11.1, 11.2) et une deuxième face (12.1, 12.2) opposées l'une à l'autre et qui sont reliés l'un à l'autre par au moins une articulation (19) de telle manière que les deux demi-corps soient mobiles l'un par rapport à l'autre et présentent une première position de fermeture dans laquelle les premières faces des demi-corps sont en regard l'une de l'autre, les premières faces étant pourvues chacune d'au moins un logement ouvert (13.1, 13.2) pour recevoir une portion d'un tube d'un premier diamètre, un alésage cylindrique (17.1) s'étendant depuis l'une des première et deuxième faces d'au moins le premier demi-corps pour déboucher dans le logement de l'autre des faces du premier demi-corps pour former un canon de perçage, **caractérisé en ce que** l'articulation est agencée de telle manière que les deux demi-corps soient mobiles l'un par rapport à l'autre entre la première position de fermeture et une deuxième position de fermeture dans laquelle les deuxièmes faces des demi-corps sont en regard l'une de l'autre, et **en ce que** les deuxièmes faces sont pourvues chacune d'au moins un logement ouvert (14.1, 14.2) pour recevoir une portion d'un tube d'un deuxième diamètre.

2. Guide selon la revendication 1, dans lequel le deuxième demi-corps (10.2) est pourvu d'un alésage (17.2) positionné pour s'étendre coaxialement à l'alésage du premier demi-corps lorsque les demi-corps sont dans au moins une des positions de fermeture.

3. Guide selon la revendication 1, comprenant des moyens annexes de guidage d'un outil coupant de perçage dans au moins un des alésages.

4. Guide selon la revendication 3, dans lequel les moyens annexes de guidage comprennent une cale (300) entourant l'outil coupant, la cale (300) ayant un diamètre légèrement inférieur à un diamètre de l'alésage.

5. Guide selon la revendication 1, dans lequel les demi-corps (10.1, 10.2) sont reliés l'un à l'autre par une biellette (19) articulée à chacun des demi-corps.

6. Guide selon la revendication 1, dans lequel au moins un des demi-corps comporte une partie de préhension (23.1, 23.2) agencée pour pouvoir être pincée dans un dispositif de serrage.

7. Guide selon la revendication 1, comprenant au moins un organe de maintien des demi corps dans l'une au moins des positions de fermeture.

8. Guide selon la revendication 7, dans lequel
l'organe de maintien comprend une vis à oeillet (20) pourvue d'un écrou (21) et articulée sur l'un des demi-corps (10.1) entre deux positions à 180° l'une de l'autre pour pouvoir être reçue dans une rainure (22) de l'autre demi-corps (10.2) lorsque les demi-corps sont dans l'une quelconque de leurs positions de fermeture.

9. Combinaison d'un guide selon la revendication 1 et d'un outil coupant, comprenant des moyens annexes de guidage de l'outil coupant de perçage dans au moins un des alésages, dans lequel l'outil coupant est un foret étagé comportant une partie de plus fort diamètre formant les moyens annexes de guidage et une partie coupante de diamètre inférieur.

## Patentansprüche

1. Bohrführung zum Bohren von Rohren mit verschiedenen Durchmessern, umfassend mindestens eine erste Gehäusehälfte (10.1) und eine zweite Gehäusehälfte (10.2), die jeweils eine erste Seite (11.1, 11.2) und eine zweite Seite (12.1, 12.2) haben, die einander gegenüberliegen, und die miteinander über mindestens eine Gelenkverbindung (19) derart verbunden sind, dass die beiden Gehäusehälften zueinander beweglich sind und eine erste Schließstellung aufweisen, in der die ersten Seiten der Gehäusehälften einander gegenüberliegen, wobei die ersten Seiten jeweils mit mindestens einer offenen Aufnahme (13.1, 13.2) versehen sind, um einen Abschnitt eines Rohres mit einem ersten Durchmesser aufzunehmen, wobei sich eine zylindrische Bohrung (17.1) von der ersten oder der zweiten Seite mindestens der ersten Gehäusehälfte erstreckt, um in die Aufnahme der anderen der Seiten der ersten Gehäusehälfte zu münden, um eine Bohrhülse zu bilden, **dadurch gekennzeichnet, dass** die Gelenkverbindung so ausgebildet ist, dass die beiden Gehäusehälften zueinander zwischen der ersten Schließstellung und einer zweiten Schließstellung beweglich sind, in der die zweiten Seiten der Gehäusehälften einander gegenüberliegen, und dass die zweiten Seiten jeweils mit mindestens einer offenen Aufnahme (14.1, 14.2) versehen sind, um einen Abschnitt eines Rohres mit einem zweiten Durchmesser aufzunehmen.

2. Führung nach Anspruch 1, bei der die zweite Gehäusehälfte (10.2) mit einer Bohrung (17.2) versehen ist, die so positioniert ist, dass sie sich koaxial zur Bohrung der ersten Gehäusehälfte erstreckt, wenn die Gehäusehälften in mindestens einer der Schließstellungen sind.

3. Führung nach Anspruch 1, umfassend zusätzliche Führungsmittel zum Führen eines Bohrschneidwerkzeuges in mindestens einer der Bohrungen.

4. Führung nach Anspruch 3, bei der die zusätzlichen Führungsmittel ein Passstück (300) umfassen, das das Schneidwerkzeug umgibt, wobei das Passstück (300) einen Durchmesser hat, der geringfügig kleiner als ein Durchmesser der Bohrung ist.

5. Führung nach Anspruch 1, bei der die Gehäusehälften (10.1, 10.2) miteinander über eine Stange (19) verbunden sind, die an jeder der Gehäusehälften angelenkt ist.

6. Führung nach Anspruch 1, bei der mindestens eine der Gehäusehälften einen Greifabschnitt (23.1, 23.2) umfasst, der so ausgebildet ist, dass er in einer Spannvorrichtung festgeklemmt werden kann.

7. Führung nach Anspruch 1, umfassend mindestens ein Haltelement zum Halten der Gehäusehälften in mindestens einer der Schließstellungen.

8. Führung nach Anspruch 7, bei der das Halteelement eine Ösenschraube (20) umfasst, die mit einer Mutter (21) versehen und an einer der Gehäusehälften (10.1) zwischen zwei um 180° zueinander versetzten Positionen angelenkt ist, um in einer Nut (22) der anderen Gehäusehälfte (10.2) aufgenommen zu werden, wenn die Gehäusehälften in irgendeiner ihrer Schließstellungen sind.

9. Kombination aus einer Führung nach Anspruch 1 und einem Schneidwerkzeug, umfassend zusätzliche Führungsmittel zum Führen des Bohrschneidwerkzeugs in mindestens einer der Bohrungen, bei der das Schneidwerkzeug ein Stufenbohrer ist, der einen Abschnitt mit stärkerem Durchmesser umfasst, der die zusätzlichen Führungsmittel bildet, sowie einen Schneidabschnitt mit geringerem Durchmesser.

## Claims

1. Drilling jig for tubes of different diameters, including at least a first half-body (10.1) and a second half-body (10.2) connected to each other by at least one articulation (19) and each having a first face (11.1, 11.2) and a second face (12.1, 12.2) opposite each other so that the two half-bodies are movable relative to each other and have a first closed position in which the first faces of the half-bodies face each other, wherein the first faces each include at least one open housing (13.1, 13.2) for receiving a portion of a tube of a first diameter and a cylindrical bore (17.1) extends from one of the first and second faces of at least the first half-body to open into the housing of the other of the faces of the first half-body to form a drill bushing, **characterised in that** the articulation is such that the two half-bodies are movable relative to each other between the first closed position and a second closed position in which the second faces of the half-bodies face each other and **in that** each of the second faces includes at least one open housing (14.1, 14.2) to receive a portion of a tube of a second diameter.

2. Jig according to claim 1, wherein the second half-body (10.2) includes a bore (17.2) positioned to extend coaxially with the bore of the first half-body when the half-bodies are in at least one of the closed positions.

3. Jig according to claim 1, including auxiliary means for guiding a drilling cutter in at least one of the bores.

4. Jig according to claim 3, wherein the auxiliary guide means include a packing piece (300) surrounding the cutter, the packing piece (300) having a diameter slightly smaller than a diameter of the bore.

5. Jig according to claim 1, wherein the half-bodies (10.1, 10.2) are connected to each other by a link (19) articulated to each of the half-bodies.

6. Jig according to claim 1, wherein at least one of the half-bodies includes a holding portion (23.1, 23.2) adapted to be clamped in a clamping device.

7. Jig according to claim 1, including at least one member for retaining the half-bodies in at least one of the closed positions.

8. Jig according to claim 7, wherein the retaining member includes an eyebolt (20) with a nut (21) and articulated on one of the half-bodies (10.1) between two positions at 180° from each other so that it can be received in a groove (22) of the other half-body (10.2) when the half-bodies are in either of their closed positions.

9. Combination of a jig according to claim 1 and a drilling cutter, including auxiliary means for guiding the cutter in at least one of the bores, wherein the cutter is a stepped drill including a larger diameter portion forming the auxiliary guide means and a smaller diameter cutting portion.
